# FASCICULE DE BREVET EUROPEEN

(11) **EP 2 911 533 B1**
(45) Date de publication et mention de la délivrance du brevet: **26.09.2018**
(21) Numéro de dépôt: 13779607.4
(22) Date de dépôt: 22.10.2013
(51) Int. Cl.: A23P 20/20, A21C 9/06, A21C 3/06

(54) **PROCÉDÉ DE FABRICATION D'ALIMENT(S) FOURRÉ(S), ET INSTALLATION CORRESPONDANTE**
HERSTELLVERFAHREN FÜR GEFÜLLTE LEBENSMITTEL, UND KORRESPONDIERENDE VORRICHTUNG
METHOD FOR PRODUCING FILLED FOOD ITEMS, AND CORRESPONDING DEVICE

(30) Priorité: 23.10.2012 FR 1260085
(43) Date de publication de la demande: 02.09.2015
(60) Demande divisionnaire: 16155027.2
(73) Titulaire: Fromageries Bel, 92150 Suresnes (FR)
(72) Inventeur: DA PONTE, Victor, 78430 Louveciennes (FR); SOUDIERE, Gérard, 55110 Doulcon (FR); QUESTE, Dominique, 21110 Genlis (FR)
(74) Mandataire: Lavoix
(86) Numéro de dépôt international: PCT/EP2013/072048
(87) Numéro de publication internationale: WO 2014/064091

(56) Documents cités:
- EP-A1- 0 160 116
- EP-A1- 2 092 835
- EP-A2- 1 726 209
- WO-A1-01/41574
- DE-A1-102010 028 326
- US-A- 3 901 137
- US-A- 5 832 813

## Description

La présente invention concerne un procédé de fabrication d'aliment(s) fourré(s), chaque aliment fourré comprenant une enveloppe extérieure en un premier produit alimentaire, et un fourrage intérieur en un deuxième produit alimentaire.

Des procédés de fabrications d'aliments fourrés sont connus. Par exemple, on connaît de WO 2011/144872 un procédé de fabrication de makis. Dans ce procédé de fabrication, une feuille d'algues séchées est placée sur un tapis, puis du riz est disposé de façon uniforme sur la feuille d'algues. Le tapis est ensuite enroulé de façon à former un cylindre. Cela a pour effet de grouper le riz en un cylindre de riz et de plaquer la feuille d'algues sur toute la surface latérale dudit cylindre de riz, de façon à former un maki.

Cependant, ce procédé de fabrication n'est pas facilement industrialisable. En particulier, il n'est pas possible de produire des aliments fourrés à grande échelle et avec une cadence de production élevée au moyen de ce procédé de fabrication.

D'autres procédés de fabrication d'aliments fourrés sont connus de DE 10 2010 028326 A1, EP 1 726 209 A2, WO 01/41574 A1 et US 3 901 137 A.

Un objectif de l'invention est de proposer un procédé de fabrication d'aliments fourrés facilement industrialisable. D'autres objectifs sont que le procédé permette une cadence de production élevée, et soit adapté à l'emploi de produits alimentaires mous et/ou collants.

A cet effet, l'invention a pour objet un procédé du type précité, comprenant les étapes suivantes :
- fourniture d'une feuille du premier produit alimentaire, et un rouleau du deuxième produit alimentaire, et
- enroulement de la feuille autour du rouleau et
- découpe du rouleau et de la feuille enroulée autour en tronçons, au moins un des tronçons formant un aliment fourré
- et comprenant une étape supplémentaire d'entraînement des aliments fourrés par des courroies d'entraînement respectives, qui s'écartent les unes des autres.

Dans des modes de réalisation préférés de l'invention, le procédé présente également l'une ou plusieurs des caractéristiques suivantes, prise(s) isolément ou suivant toute(s) combinaison(s) techniquement possible(s) :
- l'étape de découpe est assurée par jet d'eau ;
- le rouleau s'étend suivant un axe et, lors de l'étape d'enroulement, la feuille de premier produit alimentaire et le rouleau de deuxième produit alimentaire sont introduits entre un premier et un deuxième tapis, les premier et deuxième tapis ayant un mouvement relatif l'un par rapport à l'autre avec une vitesse ayant une composante orientée perpendiculairement à l'axe du rouleau.

- le premier tapis est un tapis inférieur d'entraînement et le deuxième tapis est un tapis supérieur de roulage, qui est souple et suspendu au-dessus du premier tapis ;
- le deuxième tapis est fixé à des tubes répartis sur la longueur du deuxième tapis, chaque tube étant monté sur un barreau de diamètre inférieur au diamètre intérieur du tube ;
- une partie du deuxième tapis est en contact avec le premier tapis ;
- le premier produit alimentaire est de la viande, de préférence du jambon ;
- le deuxième produit alimentaire comprend du fromage, en particulier du fromage à pâte molle.

L'invention a également pour objet une installation de fabrication d'un aliment fourré, pour la mise en oeuvre d'un procédé tel que décrit ci-dessus, comprenant :
- des moyens de fourniture de la feuille de premier produit alimentaire,
- des moyens de fourniture du rouleau de deuxième produit alimentaire, et
- des moyens d'enroulement de la feuille autour du rouleau et
- des moyens de découpe du rouleau et de la feuille enroulée autour en une pluralité de tronçons formant chacun un aliment fourré;
- et une pluralité de courroies d'entraînement chacun propre à un aliment fourré, les courroies d'entraînement divergeant les unes des autres.

Dans des modes de réalisation préférés de l'invention, l'installation présente également l'une ou plusieurs des caractéristiques suivantes, prise(s) isolément ou suivant toute(s) combinaison(s) techniquement possible(s) :
- les moyens de découpe sont des moyens de découpe par jet d'eau ;
- les moyens d'enroulement comprennent un premier et un deuxième tapis, lesdits tapis ayant un mouvement relatif l'un par rapport à l'autre ;
- le premier tapis est un tapis inférieur d'entraînement et le deuxième tapis est un tapis supérieur de roulage, qui est souple et suspendu au-dessus du premier tapis.

D'autres caractéristiques et avantages de l'invention apparaîtront à la lecture de la description qui va suivre, donnée uniquement à titre d'exemple et faite en se référant aux dessins annexés, sur lesquels :
- la Figure 1 est une vue de côté d'un aliment fourré obtenu au moyen du procédé selon l'invention,
- la Figure 2 est une vue générale, de dessus, d'une installation selon l'invention,
- la Figure 3 est une vue en coupe d'un dispositif de dosage de l'installation de la Figure 2, marquée III sur la Figure 2,
- la Figure 4 est une vue de côté d'un poste d'enroulement de l'installation de la Figure 2,
- la Figure 5 est une vue en coupe d'un poste de découpe de l'installation de la Figure 2,
- la Figure 6 est une vue en perspective d'une lame à air comprimé de l'installation de la Figure 2,
- la Figure 7 est une vue en élévation d'un dispositif de préhension de l'installation de la Figure 2,
- la Figure 8 est une vue en perspective, de dessous, d'une tête de préhension du dispositif de préhension de la Figure 7,
- la Figure 9 est une vue d'un détail de la tête de préhension, marqué IX sur la Figure 8,
- la Figure 10 est une vue de dessous d'un détail de la tête de préhension de la Figure 8,
- la Figure 11 est une vue en perspective, de dessous, d'un dévêtisseur de la tête de préhension de la Figure 8, et
- la Figure 12 est une vue en coupe d'une vanne du dispositif de préhension de la Figure 6.

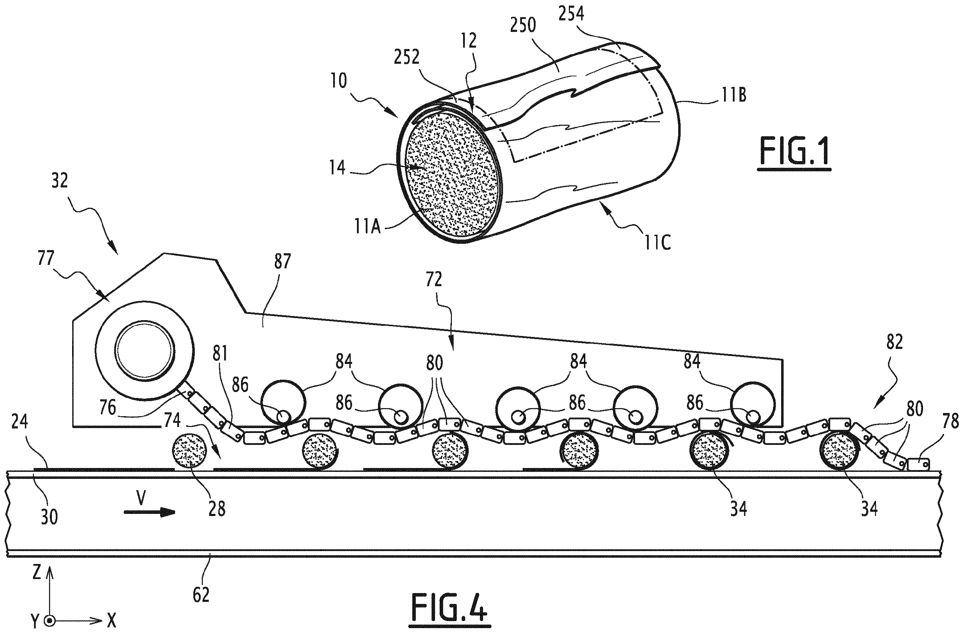

En référence à la Figure 1, le procédé selon l'invention est destiné à la fabrication d'aliments fourrés tels que l'aliment fourré 10.

Cet aliment fourré 10 est sensiblement cylindrique de révolution. Il présente ainsi deux bases 11A, 11B définissant chacune une extrémité axiale de l'aliment fourré 10, et une face latérale périphérique 11C reliant les bases 11A, 11B l'une à l'autre. Il a typiquement un diamètre compris entre 1 et 3 cm, et une longueur comprise entre 2 et 8 cm.

L'aliment fourré 10 comprend une enveloppe extérieure 12 en un premier produit alimentaire, et un fourrage intérieur 14 en un deuxième produit alimentaire.

L'enveloppe extérieure 12 est tubulaire. Elle définit la surface latérale périphérique 11C de l'aliment fourré 10. Elle ne couvre pas les extrémités axiales de l'aliment fourré 10. Vue depuis une extrémité axiale de l'aliment fourré 10, elle forme une spirale autour du fourrage intérieur 14.

Le premier produit alimentaire est typiquement de la viande, et de préférence du jambon. En variante, le premier produit alimentaire est du poisson, par exemple du saumon.

Le fourrage intérieur 14 forme un cylindre plein. Il affleure aux extrémités axiales de l'aliment fourré 10.

Le deuxième produit alimentaire est typiquement un produit fromager comprenant du fromage, de préférence plus de 70% en poids de fromage. Ce produit fromager est en particulier constitué par un caillé gras mélangé à des épices.

Le deuxième produit alimentaire a notamment une densité comprise entre 0,9 et 1.

De préférence, le deuxième produit alimentaire a un indice de pénétromètrie compris entre 80 et 300. Il est avantageusement un produit rhéofluidifiant ayant une consistance comprise entre 800 et 1200 Pa.s à 12°C, avec un indice de rhéofluidifiance compris entre 0,10 et 0,20.

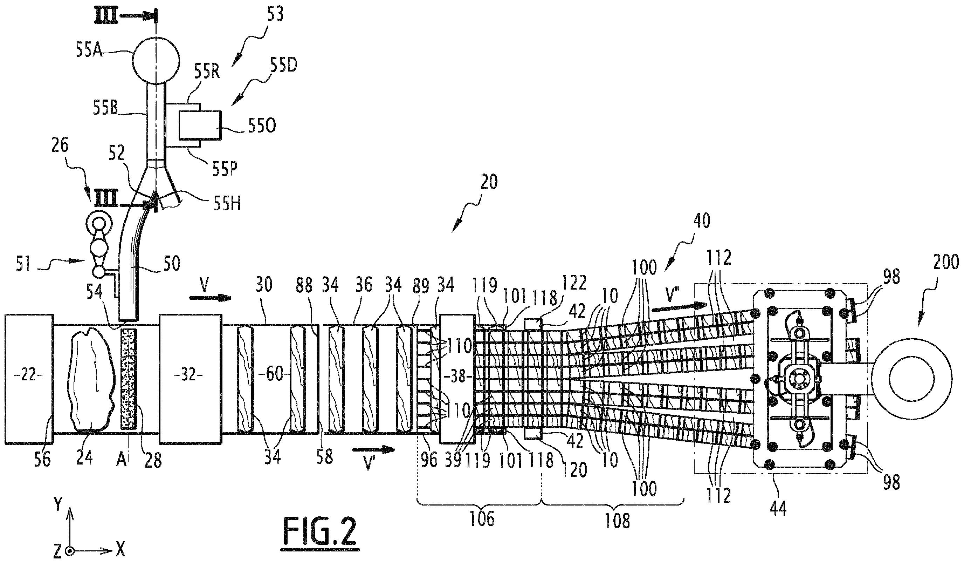

Le procédé selon l'invention est par exemple mis en oeuvre par l'installation 20 représentée sur la Figure 2.

Comme visible sur cette Figure, l'installation 20 comprend un poste 22 de fourniture d'une feuille 24 du premier produit alimentaire, un système 26 de fourniture d'un rouleau 28 du deuxième produit alimentaire, et un tapis 30 d'entraînement de la feuille 24 et du rouleau 28. L'installation 20 comprend également un poste 32 d'enroulement de la feuille 24 autour du rouleau 28 pour former un grand roulé 34, et un tapis 36 d'entreposage de grands roulés 34. L'installation 20 comprend enfin un poste 38 de découpe de chaque grand roulé 34 en tronçons 39, un dispositif 40 d'entraînement et de séparation des tronçons 39, un système 42 d'élimination des tronçons 39 d'extrémité, et un poste 44 d'emballage des aliments fourrés 10.

Dans la suite, les termes d'orientation s'entendent par rapport au repère orthogonal direct défini ci-dessous, représenté sur les Figures, et dans lequel on distingue :
- un axe longitudinal X, orienté de l'amont vers l'aval,
- un axe transversal Y, orienté de la droite vers la gauche, et
- un axe vertical Z, orienté du bas vers le haut.

Le poste de fourniture 22 est disposé à l'extrémité amont de l'installation 20. Il est typiquement constitué par un robot trancheur de jambon. Ce robot est adapté pour recevoir un bloc de jambon et pour le débiter automatiquement en tranches. De tels robots sont connus et généralement utilisés dans l'industrie agroalimentaire.

Le poste de fourniture 22 comprend une sortie 48 de dépose de la feuille 24 de premier produit alimentaire.

La feuille 24 est sensiblement rectangulaire. La sortie 48 est adaptée pour déposer la feuille 24 sur le tapis d'entraînement 30 de sorte que la direction de plus grande dimension de la feuille 24 soit orientée sensiblement transversalement.

Le rouleau 28 est sensiblement rectiligne et s'étend suivant un axe A.

Le système de fourniture 26 est adapté pour déposer le rouleau 28 sur le tapis d'entraînement 30 de sorte que l'axe A soit orienté sensiblement transversalement. A cet effet, le système de fourniture 26 comprend un flexible 50 de dépose du deuxième produit alimentaire sur le tapis d'entraînement 30, et un bras articulé 51 de manoeuvre du flexible 50.

Le flexible 50 comprend une extrémité distale 52 d'alimentation du flexible 50 en deuxième produit alimentaire. Cette extrémité distale est raccordée à un dispositif 53 de dosage du deuxième produit alimentaire. Le flexible 50 comprend également une extrémité proximale 54 de sortie du deuxième produit alimentaire hors du flexible 50.

Le bras articulé 51 est programmé pour déplacer l'extrémité proximale 54 transversalement. En option, il est également programmé pour déplacer l'extrémité proximale 54 longitudinalement et verticalement.

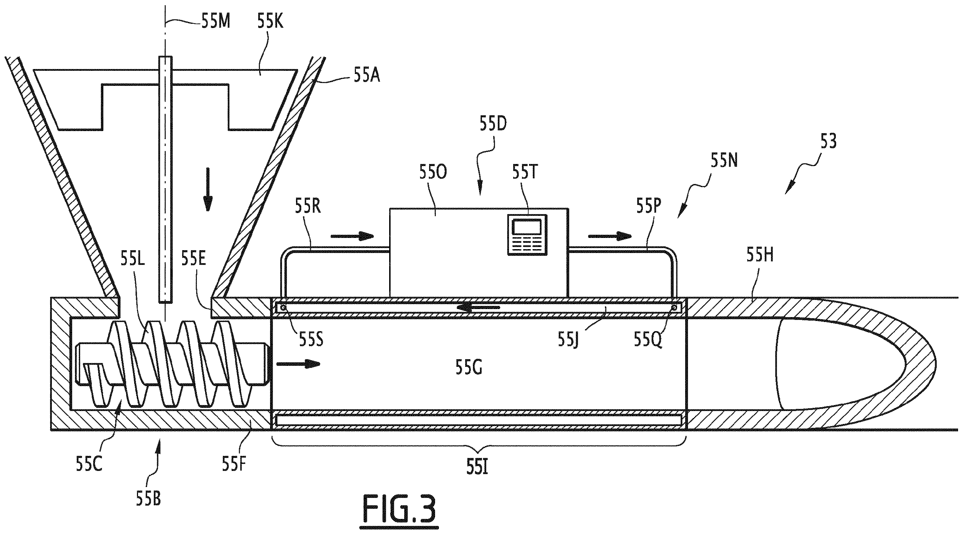

Le dispositif de dosage 53 comprend, en référence à la Figure 3, une trémie 55A de réception du deuxième produit alimentaire, un tube 55B de conduite du deuxième produit alimentaire de la trémie 55A au flexible 50, et un système 55C d'entraînement du deuxième produit alimentaire dans le tube 55B. Le dispositif de dosage 53 comprend également un système 55D de refroidissement du deuxième produit alimentaire dans le tube 55B.

La trémie 55A est disposée au-dessus du tube 55B. Elle présente dans son fond une ouverture 55E qui débouche dans le tube 55B.

Le tube 55B s'étend de la trémie 55A au flexible 50. Il comprend une paroi extérieure 55F définissant un espace intérieur 55G de circulation du deuxième produit alimentaire. La paroi 55F est en particulier en acier inoxydable.

Le tube 55B comprend également un tronçon 55I à paroi creuse. Dans ce tronçon 55I, la paroi 55F est creuse est définit une chambre périphérique 55J, s'étendant autour de l'espace intérieur 55G, de circulation d'un fluide de refroidissement du deuxième produit alimentaire.

Un raccord 55H, disposé à une extrémité de raccordement du tube 55B au flexible 50, met en communication fluidique le tube 55B avec le flexible 50. Dans l'exemple représenté, ce raccord 55H est en Y, de façon à mettre également le tube 55B en communication fluidique avec un autre flexible (non représenté) d'un deuxième système (non représenté) de fourniture en deuxième produit alimentaire.

Le système d'entraînement 55C comprend un bras agitateur 55K et une vis sans fin 55L.

Le bras agitateur 55K est disposé dans la trémie 55A. Il est monté mobile en rotation par rapport à la trémie autour d'un axe de rotation 55M coïncidant avec l'axe de la trémie 55A. Il est adapté pour, lors de sa rotation, exercer une force sur le deuxième produit alimentaire présent dans la trémie 55A poussant le deuxième produit alimentaire vers l'ouverture 55E.

La vis sans fin 55L est disposée dans le tube 55B. Son axe de rotation coïncide avec l'axe du tube 55B. La vis sans fin 55L s'étend en particulier en-dessous de l'ouverture 55E.

Le système de refroidissement 55D comprend un circuit 55N de circulation d'un fluide de refroidissement, et une unité de refroidissement 55O de refroidissement du fluide de refroidissement.

Le fluide de refroidissement est typiquement de l'eau glycolée. Le circuit 55N est adapté pour guider ce fluide de refroidissement de l'unité de refroidissement 55O à la chambre 55J, de sorte que le fluide de refroidissement circule à contre-courant du deuxième produit alimentaire dans la chambre 55J. A cet effet, le circuit 55N comprend :
- un premier flexible 55P raccordant fluidiquement l'unité de refroidissement 55O à une extrémité 55Q de la chambre 55J proche du raccord 55H,
- un deuxième flexible 55R raccordant fluidiquement l'unité de refroidissement 55O à une extrémité 55S de la chambre 55J opposée au raccord 55H, et
- une pompe (non représentée), pour faire circuler le fluide de refroidissement dans la chambre 55J de l'extrémité 55Q vers l'extrémité 55S

L'unité de refroidissement 55O est adaptée pour extraire de la chaleur du circuit de refroidissement 55N de manière à porter le fluide de refroidissement à une température de consigne comprise entre -8°C et +4°C. De préférence, elle comprend, comme représenté, un module de commande 55T adapté pour permettre à un opérateur de changer la température de consigne.

Le système d'entraînement 55C ayant tendance à échauffer le deuxième produit alimentaire et à le dégrader, le système de refroidissement 55D permet de compenser cet échauffement et de rétablir les qualités du deuxième produit alimentaire, notamment en termes de viscosité. Cela permet d'obtenir un rouleau 28 ayant une tenue satisfaisante.

En outre, la possibilité offerte à l'opérateur de changer la température de consigne permet d'ajuster le refroidissement du deuxième produit alimentaire dans le tube 55B en fonction des propriétés mécaniques du deuxième produit alimentaire reçu dans la trémie 55A. Il est ainsi possible de contrôler précisément la tenue du rouleau 28, quelles que soient les propriétés mécaniques du lot de deuxième produit alimentaire utilisé pour produire le rouleau 28.

De retour à la Figure 2, le tapis d'entraînement 30 s'étend d'une extrémité amont 56 de prise en charge des premier et deuxième produits alimentaires jusqu'à une extrémité aval 58 de dépose des grands roulés 34 sur le tapis d'entreposage 36.

De façon connue, le tapis d'entraînement 30 est un tapis roulant sans fin tendu par des cylindres (non représentés) disposés aux extrémités amont et aval 56, 58 du tapis 30. Une partie du tapis 30, disposée au-dessus des cylindres, définit une face supérieure 60 du tapis 30. Une autre partie du tapis 30, disposée en-dessous des cylindres, définit une face inférieure 62 (Figure 4) du tapis 30.

L'un de ces cylindres est entraîné par un moteur (non représenté), de façon à entraîner le tapis 30 pour que chaque point de la surface supérieure 60 se déplace de l'extrémité amont 56 à l'extrémité aval 58. On définit une vitesse V du tapis d'entraînement 30 comme étant la vitesse de chacun de ces points. La vitesse V est ainsi orientée sensiblement longitudinalement, de l'amont vers l'aval.

La vitesse V est en particulier comprise entre 100 et 200 mm/s.

Le tapis d'entraînement 30 traverse le poste d'enroulement 32.

En référence à la Figure 4, le poste d'enroulement 32 comprend en particulier un premier tapis 70 et un deuxième tapis 72 définissant entre eux un espace 74 d'introduction de la feuille 24 et du rouleau 28.

Le premier tapis 70 est constitué par le tapis d'entraînement 30.

Le deuxième tapis 72 est souple et suspendu au-dessus du tapis d'entraînement 30. Il comprend une extrémité amont 76 accrochée à une attache 77 à distance au-dessus du tapis d'entraînement 30, et une extrémité aval 78 qui repose sur le tapis d'entraînement 30.

La distance de l'attache 77 au tapis d'entraînement 30 est en particulier supérieure au diamètre du rouleau 28.

L'espace d'introduction 74 est délimité entre l'extrémité amont 76 du deuxième tapis 72, et la face supérieure 60 du tapis d'entraînement 30.

Le deuxième tapis 72 est un tapis à mailles. Il est formé d'une pluralité de mailles 80 disposées consécutivement les unes aux autres, de l'amont vers l'aval. Chaque maille 80 est articulée à la ou à chaque maille 80 qui lui est adjacente autour d'un axe sensiblement transversal. Chaque maille 80 est allongée dans une direction transversale. Chaque maille 80 est en particulier constituée par un profilé plastique.

Les mailles 80 comprennent une maille 81 d'entrée en contact avec le rouleau 28. Cette maille 81 est la maille la plus proche de l'extrémité amont 76 étant adaptée pour entrer en contact avec le rouleau 28. Cette maille 81 est en particulier la maille la plus proche de l'extrémité amont 76 étant disposée à une distance du tapis d'entraînement 30 sensiblement égale au diamètre du rouleau 28.

La maille d'entrée en contact 81 est de préférence orientée sensiblement parallèlement à la face supérieure 60 du tapis d'entraînement 30.

Le poste d'enroulement 32 comprend également un dispositif 82 de suspension du deuxième tapis 72 au-dessus du tapis d'entraînement 30. Ce dispositif 82 comprend l'attache 77, et une pluralité de tubes 84, chacun monté libre sur un barreau 86 de diamètre inférieur au diamètre intérieur du tube 84. Par « monté libre sur un barreau 86 », on comprend que le tube 84 est disposé autour du barreau 86, l'axe du tube 84 étant sensiblement parallèle à la direction de plus grande dimension du barreau 86, aucun dispositif ne s'opposant au déplacement du tube 84 relativement au barreau 86 dans un plan perpendiculaire à ladite direction de plus grande dimension.

De préférence, chaque tube 84 a une longueur inférieure à celle du barreau correspondant, et le dispositif de suspension 82 comprend également une butée (non représentée) à chaque extrémité de chaque barreau 86, constituée par exemple par un flasque, pour maintenir le tube 84 correspondant autour du barreau 86.

Chaque barreau 86 est disposé à une distance du tapis 30 égale à la somme du diamètre du grand roulé 34, de l'épaisseur du tapis 72, et de l'épaisseur du tube 84 monté sur ledit barreau 86. Les barreaux 86 permettent ainsi de maintenir le tapis 72 plaqué contre le grand roulé 34 lorsqu'il est inséré entre les tapis 30, 72, de façon à assurer un bon plaquage de la feuille 24 sur le rouleau 28.

Chaque tube 84 est avantageusement, comme représenté, sensiblement cylindrique.

Les tubes 84 sont régulièrement répartis entre les extrémités amont 76 et aval 78 du deuxième tapis 72.

Il a été observé de façon surprenante que ces tubes 84 permettaient d'améliorer la qualité de l'enroulement de la feuille 24 autour du rouleau 28.

De préférence, les barreaux 86 et l'attache 77 sont solidaires d'un même bâti 87 du dispositif de suspension 82, ledit bâti 87 ayant une hauteur réglable relativement au tapis d'entraînement 30. Il est ainsi possible d'ajuster la position du deuxième tapis 72 en fonction du calibre souhaité pour les aliments fourrés.

De retour à la Figure 2, le tapis d'entreposage 36 est un tapis roulant sans fin tendu par des cylindres (non représentés) disposés à une extrémité amont 88 et à une extrémité aval 89 du tapis 36. L'extrémité amont 88 est accolée à l'extrémité aval 58 du tapis 30. Elle est de préférence disposée plus bas que ladite extrémité aval 58 du tapis 30.

Une partie du tapis 36, disposée au-dessus des cylindres, définit une face supérieure du tapis 36. Une autre partie du tapis 36, disposée en-dessous des cylindres, définit une face inférieure (non représentée) du tapis 36.

L'un de ces cylindres est entraîné par un moteur (non représenté), de façon à entraîner le tapis 36 pour que chaque point de la surface supérieure se déplace de l'extrémité amont 88 à l'extrémité aval 89. Tous les points de la surface supérieure se déplacent ainsi à une même vitesse V' qui est définie comme étant la vitesse du tapis d'entreposage 36, et qui est orientée sensiblement longitudinalement, de l'amont vers l'aval. La vitesse V' est plus petite que la vitesse V.

Le poste de découpe 38 est disposé en aval du tapis d'entreposage 36.

Le poste de découpe 38 est un poste de découpe par jet d'eau. Cela permet de couper le grand roulé 34 sans entrer en contact avec ce dernier, ce qui évite le dépôt de produit alimentaire sur une lame et est par conséquent hygiénique. En outre, cela permet d'avoir un poste de découpe 38 compact.

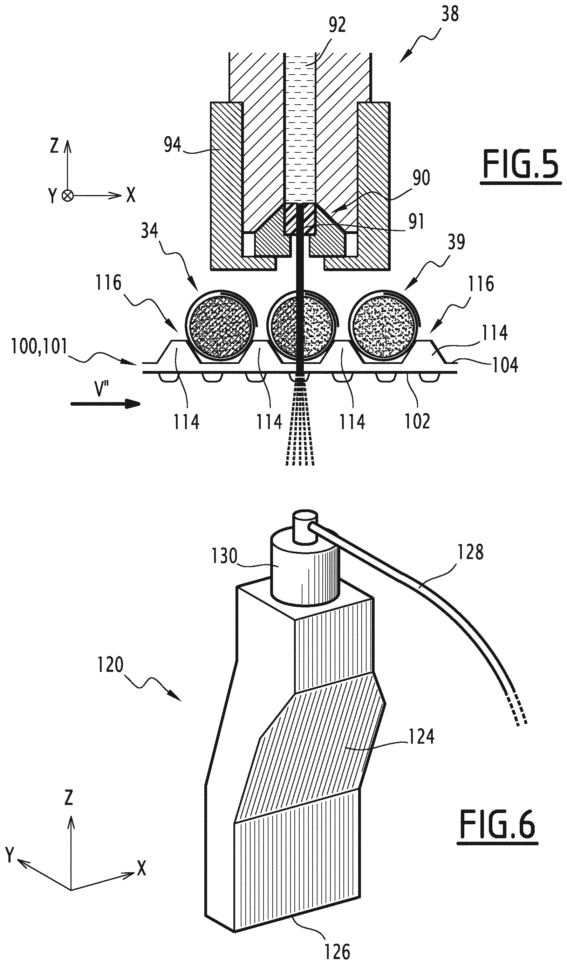

En particulier, comme visible sur la Figure 5, le poste de découpe 38 comprend une pluralité de buses 90 (seule l'une d'entre elles est représentée sur la Figure 5) d'éjection de l'eau à haute pression, de préférence à plus de 2000 bars, typiquement à 2200 bars. Ainsi, la découpe est nette et n'abîme pas les tronçons 39.

Chaque buse 90 définit un orifice 91 d'éjection d'eau. Cet orifice 91 a un diamètre de préférence supérieur à 0,14mm, typiquement égal à 0,15mm. Ainsi, le jet d'eau est suffisamment large pour entraîner avec lui une partie du deuxième produit alimentaire, ce qui évite que les tronçons 39 ne se recollent les uns aux autres après la découpe.

Chaque buse 90 est alimentée en eau au moyen d'un conduit 92. Une vanne (non représentée), de préférence une électrovanne, contrôle l'alimentation en eau du conduit 92 d'alimentation de chaque buse 90.

Dans l'exemple représenté, les buses 90 sont logées dans un boîtier 94, de préférence en inox. Ainsi, le nettoyage du poste de découpe 38 est facilité

De retour à la Figure 2, le dispositif 40 s'étend d'une extrémité amont 96, accolée à l'extrémité aval 89 du tapis d'entreposage 36, à une extrémité aval 98.

Le dispositif 40 comprend une pluralité de courroies d'entraînement 100, 101. Le nombre desdites courroies d'entraînement 100, 101 est égal au nombre de buses 90, plus un.

Chaque courroie d'entraînement 100, 101 est une courroie sans fin tendue par des galets (non représentés) disposés aux extrémités de la courroie 100, 101. L'une desdites extrémités délimite la première extrémité 96.

Chaque courroie 100, 101 comprend une face intérieure 102 (Figure 5), orientée vers les galets, et une face extérieure 104 (Figure 5), opposée à la face intérieure 102.

Une partie de la face extérieure 104, disposée au-dessus d'une droite reliant les galets associés à la courroie 100, 101, définit une face supérieure de la courroie 100, 101. Une autre partie de la face extérieure 104, disposée en-dessous de ladite droite, définit une face inférieure (non représentée) de la courroie 100, 101.

Pour chaque courroie 100, 101, l'un des galets associés à ladite courroie 100, 101 est entraîné par un moteur (non représenté), de façon à entraîner la courroie 100, 101 pour que chaque point de la face supérieure se déplace depuis l'extrémité amont 96 vers l'extrémité aval 98. Tous les points de la face supérieure se déplacent ainsi à une même vitesse V" qui est définie comme étant la vitesse de la courroie 100, 101.

La vitesse V" est égale pour chaque courroie 100, 101. Elle est également égale à la vitesse V'.

Chaque courroie 100, 101 a une largeur, mesurée dans la direction transversale Y, inférieure à la largeur de chacun des tapis 30, 36. Cette largeur est la même pour toutes les courroies 100, 101.

Les courroies 100, 101 comprennent des courroies centrales 100, et deux courroies d'extrémité 101.

Les courroies d'extrémité 101 sont disposées aux extrémités transversales du dispositif 40. Une première courroie d'extrémité 101 est disposée à l'extrémité transversale droite, et une deuxième courroie d'extrémité 101 est disposée à l'extrémité transversale gauche.

Les courroies centrales 100 sont disposées transversalement entre les courroies d'extrémité 101. Ensemble, les courroies d'extrémité 101 encadrent transversalement les courroies centrales 100.

Les tronçons 39 portés par les courroies d'extrémités 101 constituent des chutes 119. Les tronçons 39 portés par les courroies centrales 100 constituent les aliments fourrés 10 produits par l'installation 20.

Chaque courroie centrale 100 s'étend de l'extrémité amont 96 du dispositif 40 à l'extrémité aval 98. Chaque courroie d'extrémité 101 est plus courte que chaque courroie centrale 100.

Sur une première portion 106 du dispositif 40, les courroies 100, 101 s'étendent parallèlement les unes aux autres. Sur une deuxième portion 108 du dispositif 40, les courroies 100 divergent les unes par rapport aux autres.

Chaque courroie d'extrémité 101 s'étend exclusivement dans la première portion 106. Ainsi chaque courroie d'extrémité 101 n'a pas de portion s'écartant des autres courroies 100, 101.

Dans la première portion 106, chaque courroie 100, 101 s'étend sensiblement longitudinalement. Les courroies 100, 101 sont juxtaposées les unes aux autres, le long de la direction transversale Y. Pour chaque paire de courroies 100, 101 consécutives, un espace 110 de largeur constante, c'est-à-dire dont la largeur ne varie pas entre l'amont et l'aval de la première portion 106, est ménagé entre lesdites courroies 100, 101. Cette largeur est de préférence inférieure à un cinquième de la largeur de chaque courroie 100, 101.

Les largeurs des courroies 100, 101 et des espaces 110 sont adaptées pour que leur somme soit sensiblement égale à la largeur du tapis d'entreposage 36.

Dans la première portion 106, les courroies 100, 101 traversent le poste de découpe 38. Elles sont agencées relativement aux buses 90 de sorte que chaque buse 90 est disposée au-dessus d'un espace 110.

Chaque courroie d'extrémité 101 s'étend de l'extrémité amont 96 jusqu'à une extrémité terminale 118. Ladite extrémité terminale 118 est disposée en aval du poste de découpe 38, et en amont du système d'élimination 42.

Dans la deuxième portion, les courroies 100 sont juxtaposées les uns aux autres, le long de la direction transversale Y. Chaque courroie 100 s'étend le long d'une direction d'extension formant un angle avec la direction d'extension de chaque autre courroie 100. Pour chaque paire de courroies 100 consécutives, l'angle formé entre les directions d'extension desdites courroies 100 est de préférence inférieur à 0°7'. En particulier, pour chaque paire extérieure de courroies 100 consécutives, c'est-à-dire pour chaque paire de courroies 100 consécutives telle que l'une des courroies 100 de la paire n'est pas encadrée transversalement par deux autres courroies 100, l'angle formé entre les directions d'extension des courroies 100 de la paire est de préférence inférieur à 0°55'..

On notera que, pour des raisons de clarté, les angles entre les directions d'extension des courroies 100 ont été accentués sur la Figure 2.

Pour chaque paire de courroies 100 consécutives, un espace 112 est ménagé entre lesdites courroies 100. Cet espace 112 a une largeur croissante de l'amont vers l'aval. Il s'inscrit dans le prolongement d'un espace 110. Ainsi, à la limite entre les première et deuxième parties 106, 108, la largeur de l'espace 112 est égale à la largeur de l'espace 110 correspondant.

Les aliments fourrés 10 étant ainsi portés à l'écart des uns des autres, ils ne risquent pas de se recoller. En outre, cette opération se faisant sans manipulation des aliments fourrés 10, ces derniers ne sont pas abîmés.

En référence à la Figure 5, chaque courroie 100, 101 est indentée. En d'autres termes, la face extérieure 104 de chaque courroie 100, 101 comprend une pluralité de nervures 114, orientée chacune perpendiculairement à la direction d'extension de la courroie 100, 101, et définissant entre elles des alvéoles 116 de réception des grands roulés 34.

Les alvéoles 116 des différentes courroies 100, 101 sont alignées transversalement les unes par rapport aux autres.

Cette indentation permet de maintenir les grands roulés 34 longitudinalement à l'écart les uns des autres, de façon à éviter qu'ils ne collent les uns aux autres.

De retour à la Figure 2, le système d'élimination 42 est disposé transversalement de part et d'autre des courroies centrales 100, en amont de la deuxième portion 108 du dispositif 40. Il est adapté pour détacher des aliments fourrés 10 portés par les courroies centrales 100 les chutes 119 collées auxdits aliments fourrés 10.

A cet effet, le système d'élimination 42 comprend deux lames à air comprimé 120, 122. Une première lame à air comprimé 120 est disposée à droite des courroies centrales 100, et affleure la courroie centrale 100 disposée la plus à droite. Une deuxième lame à air comprimé 122 est disposée à gauche des courroies centrales 100, et affleure la courroie centrale 100 disposée la plus à gauche. Le recours aux lames à air 120, 122 permet d'éliminer les chutes 119 sans contact du système d'élimination 42 avec les produits alimentaires, ce qui évite l'encrassement du système d'élimination 42 et simplifie en conséquence le nettoyage de l'installation 20.

En référence à la Figure 6, sur laquelle seule la première lame à air comprimé 120 est représentée, chaque lame à air comprimé 120, 122 comprend un corps 124 comprenant une chambre interne (non représentée) de réception d'air comprimé, et débouchant vers l'extérieur du corps 124 au travers d'un orifice oblong 126 orienté vers le bas. Il comprend également un tuyau 128 d'alimentation de la chambre en air comprimé, et une électrovanne 130, interposée entre le tuyau 128 et la chambre, pour piloter l'alimentation de la chambre en air comprimé. L'électrovanne 130 est programmée pour raccorder fluidiquement la chambre au tuyau 128 à intervalles temporels réguliers.

La lame à air comprimé, respectivement 120, 122, est disposée de sorte que l'orifice oblong 126 soit allongé parallèlement à la direction d'extension des courroies centrales 100, et affleure la courroie centrale 100 la plus à droite, respectivement la plus à gauche.

Le poste d'emballage 44 est disposé à l'extrémité aval de l'installation 20. Il comprend un dispositif 200 selon l'invention de préhension des aliments fourrés 10 sur les courroies centrales 100, et de dépose desdits aliments dans des barquettes (non représentées).

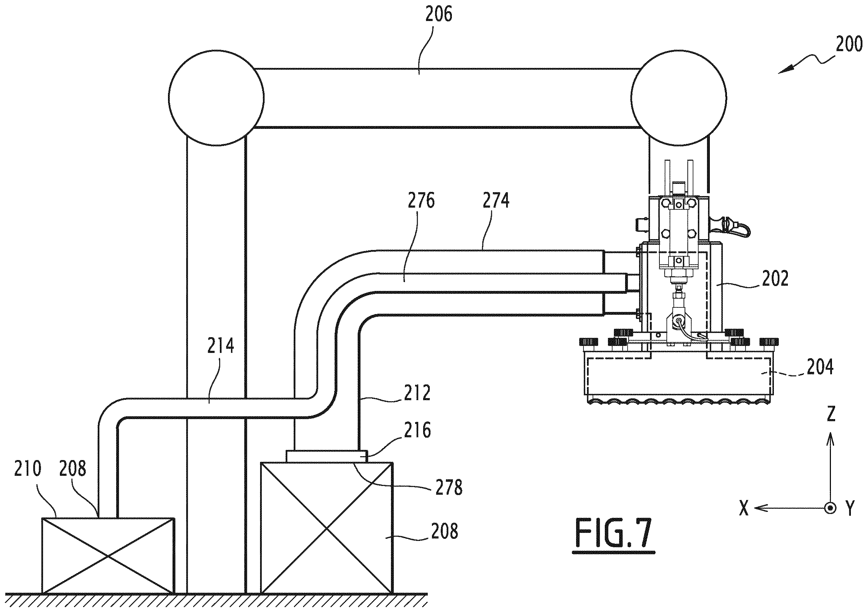

En référence à la Figure 7, le dispositif de préhension 200 comprend une tête de préhension 202, délimitant une chambre interne 204, et un bras robotisé 206 de déplacement de la tête de préhension 202. Il comprend également un système 208 de dépressurisation de la chambre 204, un système 210 d'insufflation de gaz dans la chambre 204, un premier raccordement fluidique 212 reliant le système de dépressurisation 208 à la chambre 204, et un deuxième raccordement fluidique 214 reliant le système d'insufflation 210 à la chambre 204. Enfin, le dispositif 200 comprend une vanne 216, pour sélectivement obturer ou libérer le premier raccordement fluidique 212.

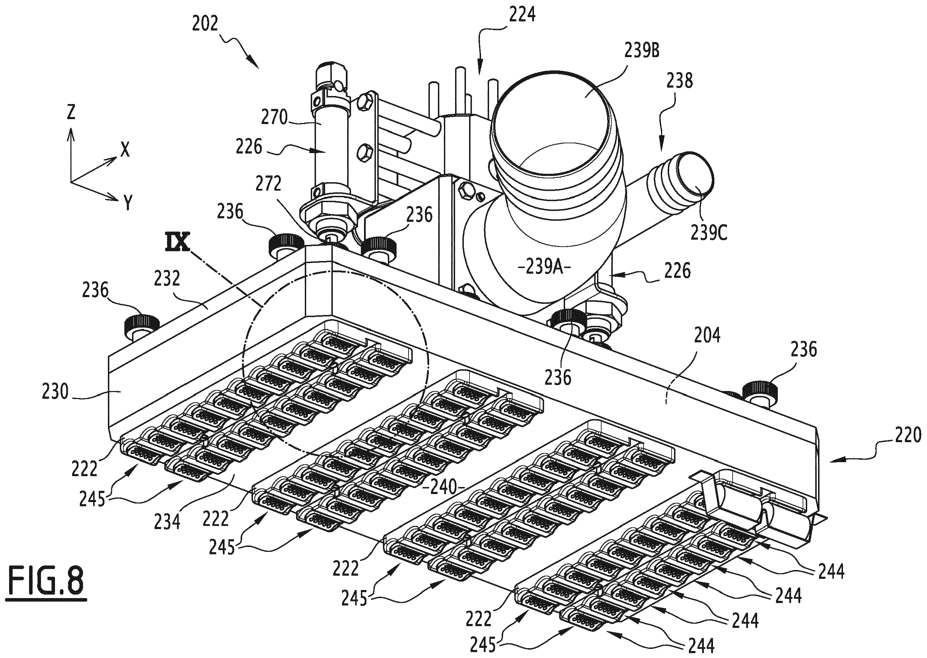

En référence à la Figure 8, la tête de préhension 202 comprend un corps 220, délimitant la chambre 204, et une pluralité de dévêtisseurs 222, chacun monté mobile en translation sur le corps 220. La tête de préhension 202 comprend également un organe 224 de liaison du corps au bras robotisé 206, et des actionneurs 226, pour déplacer les dévêtisseurs 222 relativement au corps 220.

Le corps 220 comprend un cadre 230, un couvercle 232 et un fond 234, entre lesquels est délimitée la chambre 204.

Le cadre 230, le couvercle 232 et le fond 234 sont avantageusement chacun en polyéthylène haute densité (PEHD). Grâce à l'emploi de ce matériau, une longue durée de vie du corps 220 est garantie, car le PEHD résiste très bien dans les environnements frais, typiquement de température inférieure à 8°C, et aux produits nettoyants agressifs utilisés dans l'agroalimentaire. En outre, le PEHD est léger, notamment plus léger que les aciers inoxydables, ce qui permet d'utiliser pour le bras robotisé 206 un bras robotisé relativement peu puissant, donc peu cher et économe en énergie.

Le cadre 230 et le fond 234 sont venus de matière. Le cadre 230 et le couvercle 232 sont assemblés de manière détachable l'un à l'autre, de façon à permettre le nettoyage de la chambre 204. A cet effet, le couvercle 232 présente une pluralité d'orifices traversants (non représentés), répartis à sa périphérie et disposés en regard d'orifices taraudés respectifs (non représentés) ménagés dans le cadre 230, et des vis 236, chacune engagée au travers d'un desdits orifices traversants, et vissée à l'orifice taraudé respectif.

Le cadre 230 a une forme sensiblement parallélépipédique.

Le couvercle 232 a une forme complémentaire à celle du cadre 230. Il porte l'organe de liaison 224.

Le couvercle 232 porte également un raccord 238 pour les premier et deuxième raccordements fluidiques 212, 214. Le raccord 238 a une forme générale en Y, avec le pied 239A du Y raccordé fluidiquement à la chambre 204, une première branche 239B du Y raccordée fluidiquement au premier raccordement fluidique 212, et une deuxième branche 239C du Y raccordée fluidiquement au deuxième raccordement fluidique 214. La première branche 239B a un diamètre supérieur à celui de la deuxième branche 239C.

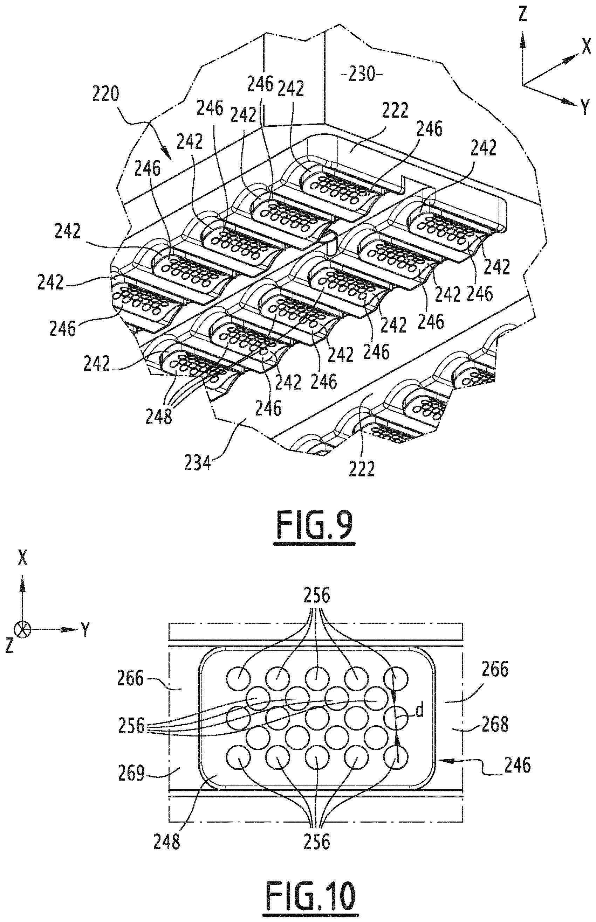

Le fond 234 présente une face extérieure 240 sensiblement plane, depuis laquelle font saillie une pluralité de protubérances 242 (Figure 9) du fond 234. Chaque protubérance 242 fait saillie vers l'extérieur, à l'opposée de la chambre 204.

Les protubérances 242 sont alignées en rangées 244 sensiblement parallèles les unes aux autres et en colonnes 245 sensiblement parallèles les unes aux autres. Les colonnes 245 sont orientées sensiblement perpendiculairement aux rangées 244. Le nombre de colonnes 245 est égal au nombre de courroies centrales 100 que comprend le dispositif d'entraînement 40.

Par « sensiblement parallèles », on comprend que l'angle formé entre deux rangées 244 ou deux colonnes 245 consécutives est inférieur à 0°7'.

En référence à la Figure 9, chaque protubérance 242 est creuse. Elle délimite une cavité interne (non représentée) débouchant dans la chambre 204. Elle est fermée à son extrémité opposée à la face extérieure 240 par une plaque perforée 246.

Dans la suite, on assimilera la cavité interne de chaque protubérance 242 à une partie de la chambre 204.

La plaque perforée 246 de chaque protubérance 242 définit une surface extérieure 248 de réception d'un des aliments fourrés 10. Cette surface de réception 248 est destinée à venir en contact avec une surface de préhension 250 (Figure 1) dudit aliment fourré 10.

La surface de préhension 250 est constituée par plus de 25% de la surface extérieure de l'aliment fourré 10. Elle est en particulier constituée par une partie de la face latérale 11C.

La surface de préhension 250 ne s'étend pas de l'une des extrémités axiales de l'aliment fourré 10 à l'autre. En d'autres termes, des tronçons d'extrémité 252, 254 (Figure 1) de l'aliment fourré 10 sont laissés libres de part et d'autre de la surface de préhension 250.

La surface de réception 248 est concave, avec une concavité orientée à l'opposée de la chambre 204. En particulier, la surface de réception 248 a une forme complémentaire de celle de la surface de préhension 250. Ainsi, dans l'exemple représenté, la surface de réception 248 a une forme de portion de cylindre. On définit une direction axiale de la surface de réception 248 en référence au cylindre dont la surface de réception 248 formerait ainsi une portion.

En référence à la Figure 10, la plaque perforée 246 présente une pluralité de perforations 256 débouchant chacune dans la surface de préhension 248 et dans la chambre 204. Chaque perforation 256 a un diamètre d inférieur à 2 mm, et de préférence compris entre 1,5 et 2 mm.

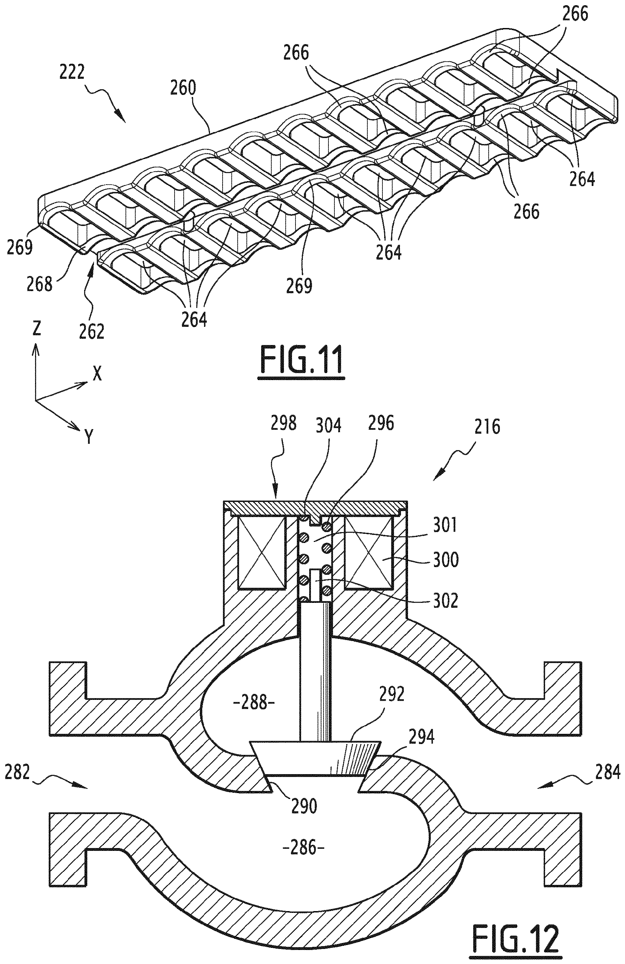

En référence à la Figure 11, chaque dévêtisseur 222 est formé d'une pièce monobloc en PEHD. Il présente une face supérieure 260, destinée à venir en contact avec la face extérieure 240 du fond 234, une face inférieure 262, opposée à la face supérieure 260, et une pluralité de fenêtres 264 traversantes, débouchant chacune dans la face supérieure 260 et dans la face inférieure 262.

Chaque fenêtre 264 est associée à une protubérance 242 respective. La protubérance respective 242 s'étend au travers de la fenêtre 264, de sorte que le dévêtisseur 222 entoure ladite protubérance 242. La fenêtre 264 a un contour complémentaire du contour extérieur de la plaque perforée 246 fermant la protubérance respective 242.

Chaque dévêtisseur 222 est adapté pour entourer les protubérances 242 de deux colonnes 245 adjacentes.

Chaque dévêtisseur 222 présente une pluralité de surfaces d'appui 266, encadrant chacune une fenêtre 264 respective. En particulier, chaque dévêtisseur 222 présente une surface d'appui 266 pour chaque fenêtre 264 du dévêtisseur.

Chaque surface d'appui 266 encadre ainsi également une surface de réception 248 respective, qui est la surface de réception 248 définie par la plaque perforée 246 fermant la protubérance 242 associée à la fenêtre 264 respective.

Chaque dévêtisseur 222 est monté mobile en translation relativement au corps 220 entre une position rétractée, dans laquelle chaque surface d'appui 266 du dévêtisseur 222 est en retrait vers la chambre 204 relativement à la surface de réception 248, et une position déployée, dans laquelle, pour chaque surface d'appui 266, la surface de réception 248 respective est en retrait vers la chambre 204 relativement à ladite surface d'appui 266.

La surface d'appui 266 est destinée à venir en appui contre les tronçons d'extrémité 252, 254 d'un aliment fourré 10 en contact avec la surface de réception 248 respective, lorsque le dévêtisseur 222 est en position déployée.

A cet effet, la surface d'appui 266 comprend deux portions 268, 269 disposées de part et d'autre de la surface de réception 248. Chacune desdites portions 268, 269 est concave. Chacune desdites portions 268, 269 est disposée à une extrémité axiale de la surface de réception 248. Une première 268 desdites portions 268, 269 est ainsi adaptée pour venir en appui contre un premier 252 des tronçons d'extrémité 252, 254 de l'aliment fourré 10, et la deuxième portion 269 est adaptée pour venir en appui contre le deuxième tronçon d'extrémité 254 de l'aliment fourré 10.

Dans l'exemple représenté, la surface d'appui 266 est constituée par lesdites portions 268, 269.

De retour à la Figure 8, dans l'exemple représenté, chaque actionneur 226 est constitué par un vérin hydraulique. Il comprend un cylindre 270 solidaire de l'organe de liaison 224, et un piston 272 solidaire de chaque dévêtisseur 222.

Le bras robotisé 206 est programmé pour déplacer la tête de préhension 202 entre une position de préhension des aliments fourrés 10, dans laquelle la tête de préhension 202 est disposée au-dessus des courroies centrales 100, proche desdites courroies centrales 100, et une position de dépose des aliments fourrés 10, dans laquelle la tête de préhension 202 est à l'écart des courroies centrales 100, au-dessus d'un convoyeur de barquettes (non représenté).

Dans la position de préhension, chaque rangée 244 est orientée sensiblement transversalement et chaque colonne 245 est orientée sensiblement longitudinalement.

De retour à la Figure 7, le système de dépressurisation 208 est typiquement constitué par une pompe à vide, par exemple une pompe à air à effet venturi, ou une pompe à vide à canal latéral.

Le système d'insufflation 210 comprend typiquement un compresseur à air.

Chacun des premier et deuxième raccordements fluidiques, respectivement 212, 214, comprend un unique tuyau, respectivement 274, 276, raccordé par une extrémité à une sortie 278 du système de dépressurisation 208, respectivement à une sortie 280 du système d'insufflation 210, et raccordé par l'extrémité opposée au raccord 238 de la tête 202. Ainsi, le bras robotisé 206 peut déplacer la tête 202 sans que les premier et deuxième raccordements fluidiques 212, 214 ne risquent de s'emmêler.

La vanne 216 est par exemple, comme représenté, disposée à proximité de l'extrémité de raccordement du tuyau du premier raccordement fluidique 212 au système de dépressurisation 208.

En référence à la Figure 12, la vanne 216 est, comme représenté, une vanne à clapet. La vanne 216 comprend donc, de façon connue, une entrée 282, une sortie 284, une chambre amont 286, raccordée fluidiquement à l'entrée 282, une chambre aval 288, raccordée fluidiquement à la sortie 284, un orifice 290 de raccordement fluidique de la chambre amont 286 à la chambre aval 288, et un clapet 292 d'obturation de l'orifice 290.

Le clapet 292 est mobile entre une position d'obturation de l'orifice 290, dans laquelle il est en appui contre un siège 294 entourant l'orifice 290, comme représenté sur la Figure 12, et une position (non représentée) de libération de l'orifice 290, dans laquelle le clapet 292 est à l'écart du siège 294.

La vanne 216 comprend également des moyens 296 de rappel du clapet 292 vers sa position d'obturation, et un actionneur électromagnétique 298, pour déplacer le clapet 292 vers sa position de libération.

L'actionneur électromagnétique 298 comprend typiquement, comme représenté, un solénoïde 300 coaxial, et un noyau mobile 302 en fer doux, monté coulissant dans une cavité 301 relativement au solénoïde 300. La cavité 301 est orientée selon l'axe du solénoïde 300. Le noyau en fer doux 302 est solidaire du clapet 292.

L'actionneur électromagnétique 298 est adapté pour que, lorsqu'un courant circule dans le solénoïde 300, le noyau mobile 302 se déplace vers un fond 304 de la cavité 301.

Dans l'exemple représenté, les moyens de rappel 296 sont constitués par un ressort travaillant en compression et interposé entre le noyau mobile 302 d'une part, et le fond 304 de la cavité 301 d'autre part.

Un procédé de fabrication d'aliments fourrés au moyen de l'installation 20 va maintenant être décrit, en regard des Figures 2 à 12.

Dans un premier temps, un bloc de jambon (non représenté) est introduit dans le poste de fourniture 22. Il y est débité en tranches, chaque tranche formant une feuille de produit alimentaire 24. Chaque feuille 24 est déposée sur la surface supérieure 60 du tapis d'entraînement 30, et est entraînée par ce dernier vers l'aval.

Dans un deuxième temps, la vis sans fin 55L tourne d'un nombre de tours prédéterminés autour de son axe. Ce faisant, elle pousse le deuxième produit alimentaire présent dans le tube 55B vers le flexible 50.

Le dispositif de dosage 53 injecte ainsi une quantité prédéterminée de deuxième produit alimentaire dans le flexible 50. Sous l'effet de la pression occasionnée par cette injection de deuxième produit alimentaire, le deuxième produit alimentaire présent dans le flexible 50 sort au travers de l'extrémité proximale 54. Simultanément, le bras 51 déplace l'extrémité proximale 54 du flexible 50 de la droite vers la gauche, en aval d'une feuille de premier produit alimentaire 24. Ainsi, le deuxième produit alimentaire est déposé sur le tapis d'entraînement 30 sous la forme d'un rouleau 28 disposé en aval de ladite feuille 24.

Entraînés par le tapis 30, le rouleau 28 et la feuille 24 pénètrent dans le poste d'enroulement 32. Là, ils sont introduits entre le tapis d'entraînement 30 et le deuxième tapis 72.

Tout d'abord, une surface supérieure du rouleau 28 entre en contact avec le deuxième tapis 72. Le deuxième tapis 72 retient cette surface supérieure, alors que la surface inférieure de contact du rouleau 28 avec le tapis 30 continue d'être entraînée vers l'aval. Sous l'effet de ces forces opposées, le rouleau 28 commence à rouler sur le tapis d'entraînement 30 et sur le deuxième tapis 72. En roulant sur le tapis d'entraînement 30, le rouleau 28 vient en contact avec la feuille 24, et roule sur la feuille 24. La feuille 24 adhère au rouleau 28 et, sous l'effet de la rotation du rouleau 28 autour de son axe, est enroulée autour du rouleau 28.

Lorsque la feuille 24 est entièrement enroulée autour du rouleau 28, les deux forment ensemble un grand roulé 34. Le grand roulé 34 continue de rouler sur lui-même sous l'effet conjugué du tapis d'entraînement 30 et du deuxième tapis 72, jusqu'à atteindre l'extrémité aval 78 du deuxième tapis 72. Ainsi, la cohésion du grand roulé 34 est renforcée.

Lorsque le grand roulé 34 passe sous un tube 84, ce tube est soulevé et roule sur le tapis 72. Ce mouvement de roulement du tube 84 permet d'écraser convenablement la feuille 24 sur le rouleau 28. Ainsi, l'aspect extérieur du grand roulé 34 est amélioré.

Le grand roulé 34 est ensuite entraîné jusqu'à l'extrémité aval 58 du tapis 30, d'où il tombe sur le tapis d'entreposage 36. Il est alors entraîné par le tapis d'entreposage 36 jusqu'à son extrémité aval 89, d'où il tombe dans les alvéoles 116 des courroies 100, 101.

Le grand roulé 34 est conduit par les courroies 100, 101 au travers du poste de découpe 38, où il est découpé en tronçons 39 par découpe au jet d'eau. Chaque tronçon 39 est alors porté par une courroie 100, 101 respective. Les tronçons 39 correspondant aux extrémités transversales du grand roulé 34 forment des chutes 119 et sont portés par les courroies d'extrémité 101. Les autres tronçons 39 forment des aliments fourrés 10 et sont portés par les courroies centrales 100.

Chaque chute 119, portée par une courroie d'extrémité 101, tombe au niveau de l'extrémité terminale 118 de ladite courroie 101. Dans le cas où ladite chute 119, au lieu de tomber, reste collée à l'aliment fourré 10 adjacent, la chute 119 est décollée au moyen de l'une des lames à air 120, 122. A cet effet, lorsque la chute 119 est en dessous de la lame à air 120, 122, l'électrovanne 130 s'ouvre pour raccorder fluidiquement le tuyau 128 à la chambre du corps 124. De l'air comprimé pénètre dans ladite chambre et en ressort, sous pression, au travers de l'orifice oblong 126. Cet air comprimé pousse la chute 119 vers le bas, qui se détache alors de l'aliment fourré 10 et tombe.

Les aliments fourrés 10 continuent ensuite d'être entraînés vers l'aval par les courroies 100. Les courroies 100 divergeant les unes par rapport aux autres, les aliments fourrés 10 sont progressivement écartés les uns des autres. Ils arrivent finalement dans le poste d'emballage 44, où ils sont saisis sur les courroies 100 par le dispositif de préhension 200.

En particulier, le bras robotisé 206 amène la tête 202 en position de préhension, de sorte que la surface de réception 248 définie par la plaque perforée 246 fermant chaque protubérance 242 du fond 234 soit en contact avec un aliment fourré 10. Là, un courant est injecté dans le solénoïde 300 de l'actionneur électromagnétique 298 de la vanne 216, et le clapet 292 est déplacé en position de libération de l'orifice 290. Le système de dépressurisation 208 aspire alors l'air présent dans la chambre 204.

Les perforations 256 de chaque plaque perforée 246 étant bouchées par un aliment fourré 10, de l'air ne peut pas entrer dans la chambre 204 pour compenser l'air aspiré par le système de dépressurisation 208. Il se crée donc un vide relatif dans la chambre 204 et, sous l'effet de ce vide, les aliments fourrés 10 sont plaqués contre les surfaces de réception 248. Grâce à la forme des surfaces de réception 248, et au petit diamètre des perforations 256, les aliments fourrés 10 ne sont pas déformés.

Le bras robotisé 206 déplace ensuite la tête 202 en position de dépose. Pendant toute la durée du déplacement, le solénoïde 300 continue d'être alimenté en courant électrique, et le système de dépressurisation 208 est maintenu en fonctionnement.

Une fois la tête 202 en position de dépose, le solénoïde 300 cesse d'être alimenté en courant électrique. Sous l'effet des moyens de rappel 296, le clapet 292 se déplace brutalement en position d'obturation de l'orifice 290, ce qui permet d'arrêter instantanément la dépressurisation de la chambre 204, qui revient rapidement à un équilibre de pression avec l'extérieur.

Les aliments fourrés 10 ne sont alors plus plaqués contre les surfaces de réception 248, et peuvent tomber dans les barquettes disposées en-dessous de la tête 202.

Néanmoins, les aliments fourrés 10 étant collants, ils tendent à rester collés aux surfaces de réception 248. Pour faciliter leur décollage, de l'air est donc insufflé dans la chambre 204 au moyen du système d'insufflation 210. Sous l'effet de l'air insufflé, la pression augmente dans la chambre 204, et de l'air sous pression est expulsé au travers des perforations 256. Cet air sous pression appuie sur les aliments fourrés 10 et contribue ainsi les décoller de leurs surfaces de réception 248 respectives.

Pour assister au décollage, chaque dévêtisseur 222 est dans le même temps déplacé de sa position rétractée à sa position déployée. Ainsi, chaque surface d'appui 266 appuie sur les tronçons d'extrémité 252, 254 d'un aliment fourré 10, et le pousse à l'écart de la surface de réception 248.

Cette opération de déplacement de chaque dévêtisseur 222 de sa position rétractée vers sa position déployée est répétée trois fois en moins de deux secondes, chaque dévêtisseur 222 étant entre-temps repositionné en position rétractée. Il a été observé que cette répétition de l'opération de déplacement permettait un meilleur décollage des aliments fourrés 10, et déformait moins les aliments fourrés 10.

Le système d'insufflation 210 est ensuite arrêté, et la tête 202 ramenée en position de préhension des aliments fourrés 10.

Grâce à l'invention, il est possible de produire, à grande cadence, des aliments fourrés présentant un aspect satisfaisant, quand bien même ces aliments fourrés sont composés de produits alimentaires mous et/ou collants. En outre, l'invention permet la production de ces aliments fourrés dans d'excellentes conditions d'hygiène, notamment grâce au fait que le nettoyage de l'installation de production est facilité.

Par ailleurs, l'invention permet la saisie d'un produit déformable au moyen d'un dispositif de préhension sans que le produit déformable ne soit déformé. En outre, l'invention permet d'éviter que le produit déformable ne reste collé au dispositif de préhension. De plus, le nettoyage du dispositif de préhension est facilité, ce qui permet son utilisation dans des milieux présentant des normes strictes d'hygiène, comme les installations de production de produits alimentaires. Enfin, l'invention permet la manipulation rapide de produits déformables, et est donc parfaitement adaptée pour une utilisation dans une installation industrielle à cadence de production élevée.

## Revendications

1. Procédé de fabrication d'aliment(s) fourré(s) (10), chaque aliment fourré (10) comprenant une enveloppe extérieure (12) en un premier produit alimentaire, et un fourrage intérieur (14) en un deuxième produit alimentaire, comprenant les étapes suivantes :
- fourniture d'une feuille (24) du premier produit alimentaire, et un rouleau (28) du deuxième produit alimentaire,
- enroulement de la feuille (24) autour du rouleau (28), et
- découpe du rouleau (28) et de la feuille (24) enroulée autour en tronçons (39), au moins un des tronçons (39) formant un aliment fourré (10),
**caractérisé en ce qu'**il comprend une étape supplémentaire d'entraînement des aliments fourrés (10) par des courroies d'entraînement (100) respectives, qui s'écartent les unes des autres.

2. Procédé de fabrication selon la revendication 1, dans lequel l'étape de découpe est assurée par jet d'eau.

3. Procédé de fabrication selon l'une quelconque des revendications précédentes, dans lequel le rouleau (28) s'étend suivant un axe (A) et, lors de l'étape d'enroulement, la feuille de premier produit alimentaire (24) et le rouleau de deuxième produit alimentaire (28) sont introduits entre un premier (70) et un deuxième (72) tapis, les premier et deuxième tapis (70, 72) ayant un mouvement relatif l'un par rapport à l'autre avec une vitesse (V) ayant une composante orientée perpendiculairement à l'axe (A) du rouleau (28).

4. Procédé de fabrication selon la revendication 3, dans lequel le premier tapis (70) est un tapis inférieur d'entraînement (30) et le deuxième tapis (72) est un tapis supérieur de roulage, qui est souple et suspendu au-dessus du premier tapis (70).

5. Procédé de fabrication selon la revendication 4, dans lequel le deuxième tapis (72) est fixé à des tubes (84) répartis sur la longueur du deuxième tapis (72), chaque tube (84) étant monté sur un barreau (86) de diamètre inférieur au diamètre intérieur du tube (84).

6. Procédé de fabrication selon l'une quelconque des revendications 3 à 5, dans lequel une partie du deuxième tapis (72) est en contact avec le premier tapis (70).

7. Procédé de fabrication selon l'une quelconque des revendications précédentes, dans lequel le premier produit alimentaire est de la viande, de préférence du jambon.

8. Procédé de fabrication selon l'une quelconque des revendications précédentes, dans lequel le deuxième produit alimentaire comprend du fromage, en particulier du fromage à pâte molle.

9. Installation (20) de fabrication d'aliment(s) fourré(s) (10) pour la mise en oeuvre d'un procédé selon l'une quelconque des revendications précédentes, comprenant :
- des moyens (22) de fourniture de la feuille (24) de premier produit alimentaire,
- des moyens (26) de fourniture du rouleau (28) de deuxième produit alimentaire,
- des moyens (32) d'enroulement de la feuille (24) autour du rouleau (28), et
- des moyens (38) de découpe du rouleau (28) et de la feuille (24) enroulée autour en une pluralité de tronçons (39) formant chacun un aliment fourré (10),
**caractérisé en ce qu'**elle comprend une pluralité de courroies d'entraînement (100) chacune propre à un aliment fourré (10), les courroies d'entraînement (100) divergeant les unes de autres.

10. Installation de fabrication (20) selon la revendication 9, dans laquelle les moyens de découpe (38) sont des moyens de découpe par jet d'eau.

11. Installation de fabrication (20) selon la revendication 9 ou 10, dans laquelle les moyens d'enroulement (32) comprennent un premier (70) et un deuxième (72) tapis, lesdits tapis (70, 72) ayant un mouvement relatif l'un par rapport à l'autre.

12. Installation de fabrication (20) selon la revendication 11, dans laquelle le premier tapis (70) est un tapis inférieur d'entraînement (30) et le deuxième tapis (72) est un tapis supérieur de roulage, qui est souple et suspendu au-dessus du premier tapis (70).

## Patentansprüche

1. Verfahren zum Herstellen eines/von gefüllten Lebensmittels/Lebensmitteln (10), wobei jedes gefüllte Lebensmittel (10) eine äußere Hülle (12) aus einem ersten Lebensmittelprodukt und eine innere Füllung (14) aus einem zweiten Lebensmittelprodukt aufweist, aufweisend die folgenden Schritte:
- Bereitstellen eines Blatts (24) des ersten Lebensmittelprodukts und einer Rolle (28) des zweiten Lebensmittelprodukts,
- Wickeln des Blatts (24) um die Rolle (28) und
- Zuschneiden der Rolle (28) und des darum herumgewickelten Blatts (24) in Teilstücke (39), wobei mindestens eines der Teilstücke (39) ein gefülltes Lebensmittel (10) bildet,
**dadurch gekennzeichnet, dass** es einen zusätzlichen Schritt des Antreibens der gefüllten Lebensmittel (10) durch jeweilige Antriebsriemen (100) aufweist, die sich voneinander entfernen.

2. Verfahren zum Herstellen gemäß Anspruch 1, wobei der Schritt des Zuschneidens durch einen Wasserstrahl sichergestellt wird.

3. Verfahren zum Herstellen gemäß irgendeinem der vorhergehenden Ansprüche, wobei sich die Rolle (28) entlang einer Achse (A) erstreckt und das Blatt des ersten Lebensmittelprodukts (24) und die Rolle des zweiten Lebensmittelprodukts (28) während des Schrittes des Umwickelns zwischen ein erstes (70) und ein zweites (72) Band eingeführt werden, wobei das erste und das zweite Band (70, 72) bezüglich einander eine Bewegung mit einer Geschwindigkeit (V) haben, mit einer Komponente, die senkrecht zu der Achse (A) der Rolle (28) ausgerichtet ist.

4. Verfahren zum Herstellen gemäß Anspruch 3, wobei das erste Band (70) ein unteres Antriebsband (30) ist und das zweite Band (72) ein oberes Förderband ist, welches flexibel ist und über dem ersten Band (70) aufgehängt ist.

5. Verfahren zum Herstellen gemäß Anspruch 4, wobei das zweite Band (72) an Rohren (84) befestigt ist, die über die Länge des zweiten Bandes (72) verteilt sind, wobei jedes Rohr (84) an einer Stange (86) mit einem Durchmesser montiert ist, der kleiner als der Innendurchmesser des Rohres (84) ist.

6. Verfahren zum Herstellen gemäß irgendeinem der Ansprüche 3 bis 5, wobei ein Teil des zweiten Bandes (72) mit dem ersten Band (70) in Kontakt ist.

7. Verfahren zum Herstellen gemäß irgendeinem der vorhergehenden Ansprüche, wobei das erste Lebensmittelprodukt Fleisch, vorzugsweise Schinken ist.

8. Verfahren zum Herstellen gemäß irgendeinem der vorhergehenden Ansprüche, wobei das zweite Lebensmittelprodukt Käse, insbesondere Weichkäse aufweist.

9. Einrichtung (20) zum Herstellen eines/von gefüllten Lebensmittels/Lebensmitteln (10) zum Durchführen eines Verfahrens gemäß irgendeinem der vorhergehenden Ansprüche, aufweisend:
- Mittel (22) zum Bereitstellen des Blatts (24) des ersten Lebensmittelprodukts,
- Mittel (26) zum Bereitstellen der Rolle (28) des zweiten Lebensmittelprodukts,
- Mittel (32) zum Wickeln des Blatts (24) um die Rolle (28) und
- Mittel (38) zum Zuschneiden der Rolle (28) und des darum herumgewickelten Blatts (24) in eine Mehrzahl von Teilstücken (39), die jeweils ein gefülltes Lebensmittel (10) bilden,
**dadurch gekennzeichnet, dass** sie eine Mehrzahl von Antriebsriemen (100) aufweist, die jeweils zu einem gefüllten Lebensmittel (10) gehören, wobei sich die Antriebsriemen (100) voneinander entfernen.

10. Einrichtung zum Herstellen (20) gemäß Anspruch 9, wobei die Mittel zum Zuschneiden (38) Mittel zum Zuschneiden mittels eines Wasserstrahls sind.

11. Einrichtung zum Herstellen (20) gemäß Anspruch 9 oder 10, wobei die Mittel zum Wickeln (32) ein erstes (70) und ein zweites (72) Band aufweisen, wobei die Bänder (70, 72) bezüglich einander eine Bewegung haben.

12. Einrichtung zum Herstellen (20) gemäß Anspruch 11, wobei das erste Band (70) ein unteres Antriebsband (30) ist und das zweite Band (72) ein oberes Förderband ist, das flexibel ist und über dem ersten Band (70) aufgehängt ist.

## Claims

1. A method for producing stuffed food(s) (10), each stuffed food (10) comprising an outer envelope (12) in a first food product, and an inner stuffing (14) in a second food product, comprising the following steps:
- providing a sheet (24) of the first food product, and a roller (28) of the second food product,
- winding the sheet (24) around the roller (28), and
- cutting the roller (28) and the sheet (24) wound around it into segments (39), at least one of the segments (39) forming a stuffed food (10),
**characterized in that** it comprises and additional step of driving the stuffed foods (10) with respective driving belts (100) which move away from each other.

2. The production method according to claim 1, wherein the cutting step is ensured by a water jet.

3. The production method according to any of the preceding claims, wherein the roller (28) extends along an axis (A) and, during the winding step, the sheet of the first food product (24) and the roller of the second food product (28) are introduced between a first belt (70) and a second belt (72), the first and second belts (70, 72) having a relative movement with respect to each other with a velocity (V) having a component oriented perpendicularly to the axis (A) of the roll (28).

4. The production method according to claim 3, wherein the first belt (70) is a lower driving belt (30) and the second belt (72) is an upper rolling belt, which is flexible and suspended above the first belt (70).

5. The production method according to claim 4, wherein the second belt (72) is attached to tubes (84) distributed over the length of the second belt (72), each tube (84) being mounted on a bar (86) with a smaller diameter than the inner diameter of the tube (84).

6. The production method according to any of claims 3 to 5, wherein a portion of the second belt (72) is in contact with the first belt (70).

7. The production method according to any of the preceding claims, wherein the first food product is meat, preferably ham.

8. The production method according to any of the preceding claims, wherein the second food product comprises cheese, in particular soft cheese.

9. An unit (20) for producing stuffed food(s) (10) for applying a method according to any of the preceding claims, comprising:
- means (22) for providing the sheet (24) of the first food product,
- means (26) for providing the roller (28) of the second food product,
- means (32) for winding the sheet (24) around the roller (28), and
- means (38) for cutting the roller (28) and the sheet (24) wound around into a plurality of segments (39) each forming a stuffed food (10).
**characterized in that** it comprises a plurality of driving belts (100) each specific to a stuffed food (10), the driving belts (100) diverging from each other.

10. The production unit (20) according to claim 9, wherein the cutting means (38) is a water jet cutter.

11. The production unit (20) according to claim 9 or 10, wherein the winding means (32) comprises a first (70) and a second (72) belt, said belts (70, 72) having a relative movement with respect to each other.

12. The production unit (20) according to claim 11, wherein the first belt (70) is a lower driving belt (30) and the second belt (72) is an upper rolling belt, which is flexible and suspended above the first belt (70).
